# EUROPÄISCHE PATENTSCHRIFT

(11) **EP 1 674 181 B1**
(45) Veröffentlichungstag und Bekanntmachung des Hinweises auf die Patenterteilung: **24.12.2008**
(21) Anmeldenummer: 05026682.4
(22) Anmeldetag: 07.12.2005
(51) Int. Cl.: B23B 51/00, B23B 45/00

(54) **Verfahren und Vorrichtung zur Herstellung von Bohrungen**
Method of and device for boring holes
Procédé et dispositif pour réaliser des perçages

(30) Priorität: 21.12.2004 DE 102004062858
(43) Veröffentlichungstag der Anmeldung: 28.06.2006
(73) Patentinhaber: C. & E. Fein GmbH, 73529 Schwäbisch-Gmünd-Bargau (DE)
(72) Erfinder: Warnicki, Rainer, 74420 Oberrot (DE); Peisert, Andreas, 70195 Stuttgart (DE)
(74) Vertreter: Gahlert, Stefan

(56) Entgegenhaltungen:
- EP-B- 1 107 844
- DE-A1- 4 344 849
- DE-C- 540 943
- DE-C1- 19 815 443
- US-A- 1 425 402

## Beschreibung

Die Erfindung betrifft ein Werkzeug zur Herstellung von besonders geformten Bohrungen, wie unrunden Bohrungen und Bohrungen mit Hinterschneidung, ferner ein Werkzeugkit zur Herstellung von solchen Bohrungen, eine Vorrichtung zur Herstellung von Bohrungen und ein Verfahren zur Herstellung von Bohrungen.

Beim Bohren wird typischerweise ins Volle gearbeitet oder aber mit einer Bohrkrone eine Kernlochbohrung erzeugt. Bei sämtlichen bekannten Bohrverfahren weist die erzeugte Bohrung eine annähernd zylindrische Form auf.

In vielen Fällen wäre es jedoch erwünscht, Bohrungen herstellen zu können, die eine von einer zylindrischen Form abweichende Form aufweisen. Ferner wäre es erwünscht, Bohrungen mit Hinterschneidung herstellen zu können. Das heißt es wäre vorteilhaft, wenn Bohrungen hergestellt werden könnten, bei denen sich an einen ersten Bohrungsabschnitt mit einem ersten Querschnitt ein zweiter Bohrungsabschnitt mit einem größeren Querschnitt anschließt. Derartige Bohrungen mit Hinterschneidung wären in der Montagetechnik in vielfältigen Ausführungsformen äußerst hilfreich. Es könnten dann nämlich an der Hinterschneidung Verankerungselemente, wie Spreizdübel oder dergleichen angebracht werden.

Bis heute ist keine einfache und zuverlässige Möglichkeit bekannt, um derartige Bohrungen herstellen zu können.

Aus der EP-B 1 107 844 und aus der DE 540 943 C sind zwar Bohrwerkzeuge gemäß dem Oberbegriff von Anspruch 1 zum rotatorischen Antrieb bekannt, jedoch sind diese nicht zur Herstellung derartiger Bohrungen geeignet.

Der Erfindung liegt somit die Aufgabe zugrunde, ein Verfahren zur Herstellung von Bohrungen mit spezieller Form anzugeben und dazu geeignete Werkzeuge bzw. Antriebsmaschinen bereitzustellen.

Hinsichtlich des Verfahrens wird diese Aufgabe erfindungsgemäß durch ein Verfahren zum Erzeugen einer Bohrung mit folgendendem Schritt (a) gelöst:

Erzeugen eines ersten Bohrungsabschnittes mittels eines oszillierend angetriebenen Werkzeuges, wobei der erste Bohrungsabschnitt eine von einem Zylinder abweichende Form aufweist und mindestens einen von der Wandfläche des ersten Bohrungsabschnittes zur Bohrungsmitte hin vorstehenden Vorsprung aufweist.

Die Aufgabe der Erfindung wird auf diese Weise vollkommen gelöst.

Erfindungsgemäß wird im Schritt (a) mit Hilfe eines oszillierend angetriebenen Werkzeuges ein erster Bohrungsabschnitt erzeugt, der eine von einem Zylinder abweichende Form aufweist und von der Wandfläche des ersten Bohrungsabschnittes zur Bohrungsmitte hin vorstehende Vorsprünge aufweist.

Somit lässt sich mittels eines oszillierend angetriebenen Werkzeugs eine Bohrungsform erzeugen, die von einer zylindrischen Form abweicht.

In einer Weiterbildung des erfindungsgemäßen Verfahrens schließt sich, nachdem der erste Bohrungsabschnitt eine gewünschte Bohrungstiefe erreicht hat, an den Schritt (a) ein zweiter Schritt (b) an,

bei dem ein zumindest teilweises Drehen des Werkzeuges um seine Längsachse erfolgt, um einen zweiten Bohrungsabschnitt zu erzeugen, der einen größeren Querschnitt als der erste Bohrungsabschnitt aufweist.

Indem in dem zweiten Arbeitsschritt (b) nun das Werkzeug um seine Längsachse zumindest teilweise gedreht wird, wird in dem sich an den ersten Bohrungsabschnitt anschließenden Bereich der Bohrung nunmehr ein vergrößerter Bohrungsabschnitt erzeugt, der einen größeren Querschnitt als der erste Bohrungsabschnitt aufweist. Nach Ausführung einer vollständigen Umdrehung des Werkzeuges weist der zweite Bohrungsabschnitt in der Regel eine annähernd zylindrische Form auf. Somit entstehen am Übergang zwischen dem ersten und dem zweiten Bohrungsabschnitt eine oder mehrere Hinterschneidungen, deren Form von der Form des verwendeten Werkzeuges abhängig ist.

In vorteilhafter Weiterbildung der Erfindung wird das Werkzeug beim Schritt (b) von Hand gedreht oder rotierend oder intermittierend mit einer Vorzugsrichtung angetrieben.

Insbesondere beim intermittierenden Antrieb mit einer Vorzugsrichtung lässt sich beim Bohren in Gestein die gewünschte Vergrößerung des Bohrloches im Bereich des zweiten Bohrungsabschnittes auf einfache Weise allmählich erzeugen.

Gemäß einer weiteren Ausgestaltung der Erfindung wird vor dem Schritt (a) zunächst eine Vorbohrung erzeugt.

Auf diese Weise wird die Erzeugung des ersten Bohrungsabschnittes erleichtert, da das verwendete Werkzeug an der Vorbohrung mittels eines Ansatzes oder dergleichen geführt werden kann, so dass ein seitliches Weglaufen vermieden wird.

Gemäß einer weiteren Ausgestaltung der Erfindung wird während des Schrittes (a) eine Vorbohrung erzeugt.

Durch Verwendung eines geeigneten Kombinationswerkzeuges lässt sich so die Bohrungserstellung weiter vereinfachen.

Hinsichtlich des Werkzeuges wird die Aufgabe der Erfindung durch ein Werkzeug gemäß Anspruch 1 gelöst.

Unter Verwendung eines derartigen Werkzeuges lässt sich mit Hilfe eines Oszillationsantriebes in der zuvor beschriebenen Weise ein erster Bohrungsabschnitt erzeugen, der eine von einem Zylinder abweichende Form aufweist und mindestens einen von der Wandfläche des ersten Bohrungsabschnittes zur Bohrungsmitte hin vorstehenden Vorsprung besitzt.

Sofern dies gewünscht ist, kann in einem zweiten Arbeitsschritt dann, wenn der erste Bohrungsabschnitt eine ausreichende Tiefe erreicht hat, das Werkzeug um seine Längsachse gedreht werden, um den zweiten Bohrungsabschnitt zu erzeugen, der einen größeren Querschnitt als der erste Bohrungsabschnitt aufweist.

In vorteilhafter Weiterbildung der Erfindung weist der Schneidkopf des Werkzeuges mindestens zwei, vorzugsweise drei, Vorsprünge auf, die vorzugsweise in gleichen Winkelabständen zueinander angeordnet sind, wobei zwischen benachbarten Vorsprüngen Vertiefungen gebildet sind.

Mit einer derartigen Ausgestaltung lässt sich ein rotationssymmetrischer Aufbau des Schneidkopfes ermöglichen, was einem seitlichen Weglaufen bei Erstellen der Bohrung entgegenwirkt.

Gemäß einer weiteren Ausgestaltung der Erfindung sind an zumindest einem Vorsprung des Schneidkopfes abrasive Schneidmittel und/oder Schneidzähne vorgesehen.

Zusätzlich können auch an zumindest einer Stirnfläche Schneidmittel vorgesehen sein.

Hierbei können die Schneidmittel Diamantschneidmittel, Borkarbidschneidmittel, Korundschneidmittel oder dergleichen umfassen.

Auf diese Weise wird die Erstellung des ersten Bohrabschnittes mittels des oszillierenden Antriebes erleichtert.

Gemäß einer weiteren Ausgestaltung der Erfindung ist zumindest eine Außenoberfläche eines Vorsprungs annähernd kreisbogenförmig ausgebildet.

Hierdurch wird die Entstehung von Vibrationen gering gehalten.

Gemäß einer weiteren Ausgestaltung der Erfindung weist das Werkzeug einen Bohreransatz auf.

Dieser ist vorzugsweise mit einer Längsachse des Schaftes ausgerichtet.

Auf diese Weise kann mittels eines einziges Arbeitsganges sowohl eine Vorbohrung zur Führung des Werkzeuges erzeugt werden als auch gleichzeitig mit dem Schneidkopf der oszillierende Schneidbohrvorgang durchgeführt werden.

Gemäß einer weiteren Ausgestaltung der Erfindung sind zumindest die Schneidmittel oder der Bohreinsatz zum Gesteinsbohren oder zum Bohren in Holz ausgebildet.

Hierzu kann beispielsweise bei Verwendung von Diamantschneidmitteln oder Bohrschneidmitteln eine geeignete Bindung der Schneidmittel mittels einer metallischen Schicht oder einer Kunststoffschicht vorgesehen sein.

Gemäß einer weiteren Ausführung der Erfindung wird ferner ein Kit zum Erzeugen einer Bohrung mit Hinterschneidung angegeben, das ein Werkzeug der vorstehend beschriebenen Art sowie einen hierauf angepassten Bohrer umfasst.

Mit einem derartigen Kit kann in getrennten Arbeitsgängen zunächst eine Vorbohrung erzeugt werden und anschließend in einem weiteren Arbeitsschritt die Bohrung mit Hinterschneidung.

Eine Antriebswelle ist durch einen Oszillationsantrieb mit einer Oszillationseinrichtung um ihre Längsachse hin und her oszillierend antreibbar, wobei ferner ein Werkzeug gemäß der vorstehend beschriebenen Art mit der Antriebswelle gekoppelt ist.

Gemäß einer bevorzugten Weiterbildung dieser Ausführung weist der Oszillationsantrieb Mittel zur Erzeugung von Drehimpulsen auf.

Durch eine derartige Ausgestaltung des Oszillationsantriebes lässt sich ein verbesserter Vortrieb sowohl bei der Erstellung des ersten Bohrabschnittes als auch bei der Erstellung des zweiten Bohrabschnittes erreichen.

Gemäß einer weiteren Ausgestaltung ist die Oszillationseinrichtung zwischen einer hin und her gehenden Oszillation um eine Längsachse der Antriebswelle und einer Oszillation mit Drehimpulsen in einer Vorzugsdrehrichtung umschaltbar.

Auf diese Weise lässt sich sowohl der erste Bohrungsabschnitt unter Verwendung einer hin- und hergehenden Drehoszillation als auch der zweite Bohrungsabschnitt mit dem vergrößertem Bohrungsquerschnitt auf besonders einfache und vorteilhafte Weise erzeugen.

Es versteht sich, dass die vorstehend genannten und die nachstehend noch zu erläuterten Merkmale nicht nur jeweils angegebenen Kombinationen sondern auch in anderen Kombinationen oder in Alleinstellung verwendbar sind ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1:: eine erste Ausführung eines erfindungsgemäßen Werkzeuges in perspektivischer Darstellung;
- Fig. 2: eine schematische Darstellung einer erfindungsgemäß erzeugten Bohrungsform;
- Fig. 3: eine Seitenansicht einer weiteren Ausführungsform eines erfindungsgemäßen Werkzeuges und
- Fig. 4: eine teilweise geschnittene Seitenansicht eines. Oszillationantriebes, der vorteilhaft mit dem erfindungsgemäßen Werkzeug verwendbar ist.

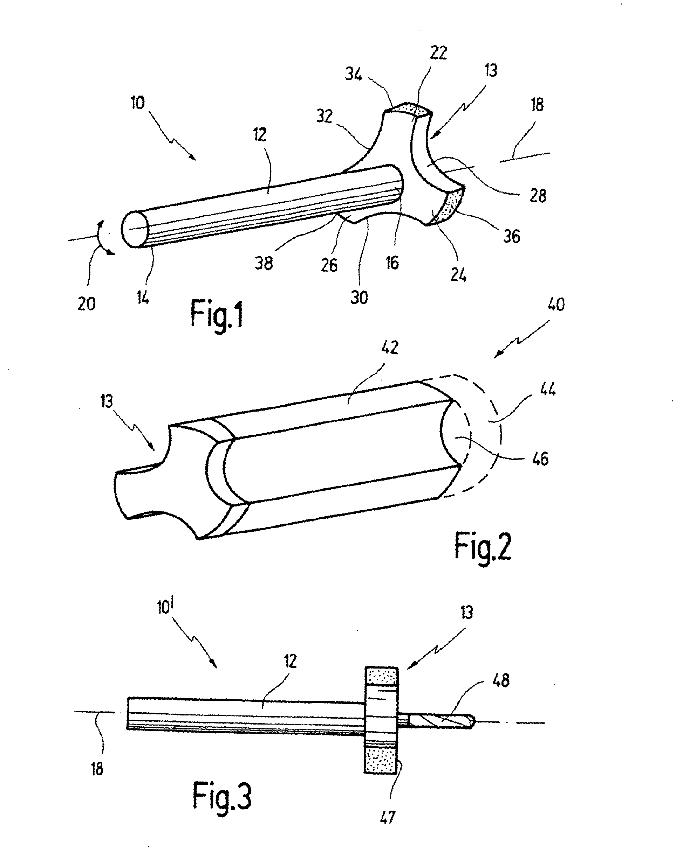

In Fig. 1 ist ein erfindungsgemäßes Werkzeug insgesamt mit der Ziffer 10 bezeichnet.

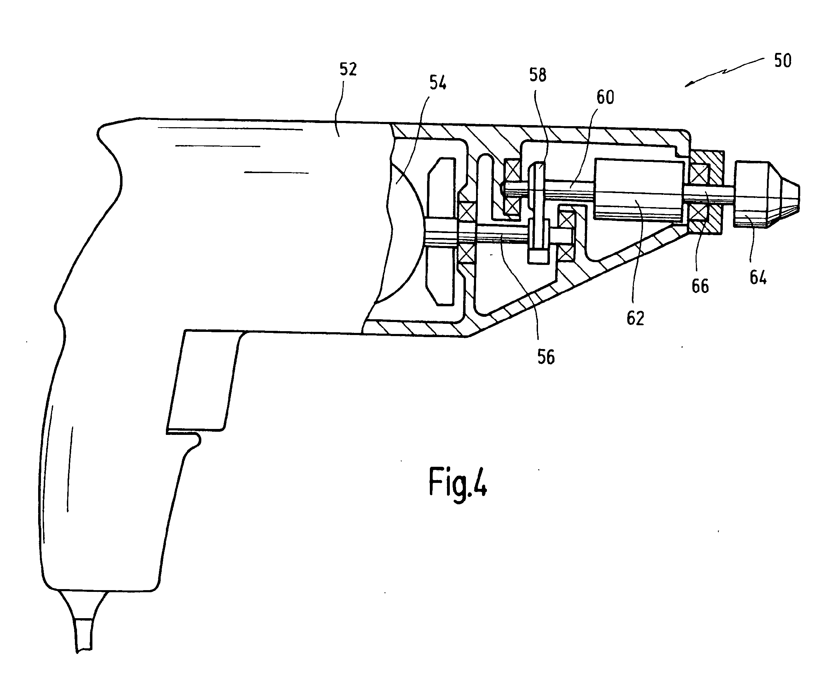

Das Werkzeug 10 umfasst einen zylindrischen Schaft 12 mit einem ersten Ende 14 und einem zweiten Ende 16. Das Werkzeug 10 kann mit seinem ersten Ende 14 in ein Spannfutter eines Oszillationsantriebes (vgl. Fig. 4) eingespannt werden. Am zweiten Ende 16 des Schaftes 12 ist ein Schneidkopf 13 vorgesehen, der drei nach außen hervorstehende Vorsprünge 22, 24, 26 aufweist, die in gleichmäßigen Winkelabständen von 120° zueinander versetzt sind. Zwischen benachbarten Vorsprüngen 22, 24, 26 ist jeweils eine Vertiefung 28, 30, 32 gebildet, die eine konkave Form aufweist. Die Vorsprünge 22, 24, 26 sind an ihren dem Schaft 12 abgewandten Oberflächen 34, 36, 38 annähernd kreisbogenförmig ausgebildet und mit Schneidmitteln in Form von Diamantschleifkörnern versehen, die in einer geeigneten Weise vorzugsweise mittels einer metallischen Schicht an der jeweils gekrümmten Oberfläche gehalten sind. Vorzugsweise ist zusätzlich auch die dem Schaft 12 abgewandte Stirnfläche 47 des Schneidkopfes 13 mit geeigneten Schneidmitteln versehen. Auch hierbei kann es sich wiederum beispielsweise um Diamantschleifkörner handeln, die in geeigneter Weise gebunden sind.

Es versteht sich, dass stattdessen auch beliebige andere Schneidmittel vorgesehen sein können und dass auch Schneidzähne oder anders geformte Schneidelemente am Schneidkopf angebracht sein können.

Wie in Fig. 1 mit dem Doppelpfeil 20 angedeutet, kann das Werkzeug, wenn es mit seinem ersten Ende 14 an einem Oszillationsantrieb befestigt ist, um seine Längsachse 18 hin und her oszillierend angetrieben werden. Hierbei erfolgt die Oszillationsbewegung vorzugsweise mit einer hohen Frequenz zwischen etwa 5.000 und 25.000 Oszillationen pro Minute und einem geringen Verschwenkwinkel zwischen etwa 0,5 und 5°.

Auf diese Weise kann mittels des Schneidkopfes 13 ein erster Bohrungsabschnitt beispielsweise in Mauerwerk erzeugt werden, dessen Form infolge der Oszillationen mit geringem Verschwenkwinkel im Wesentlichen der Form des Schneidkopfes 13 entspricht.

Dies ist schematisch in Fig. 2 dargestellt. So kann mittels des Werkzeuges 10 unter Verwendung eines Oszillationsantriebes ein erster Bohrungsabschnitt 42 erzeugt werden, der eine von einer Zylinderform abweichende Oberfläche aufweist, wobei zwischen zylindrischen Teilflächen, deren Form etwa der Form der Vorsprünge 22, 24, 26 des Werkzeuges 10 entspricht, wiederum entsprechende Vorsprünge erzeugt werden, die der Negativform der Vertiefungen 28, 30, 32 des Werkzeuges 10 annähernd entsprechen. Auf diese Weise ergibt sich die in Fig. 2 dargestellte Form des ersten Bohrungsabschnittes 42.

Hat nun die Bohrung die gewünschte Tiefe erreicht, so kann, falls eine Bohrung mit Hinterschneidung erzeugt werden soll, nunmehr die gesamte Maschine nach und nach um die Längsachse 18 gedreht werden. Auf diese Weise wird im Endbereich, in dem sich der Schneidkopf 13 befindet, allmählich die durch den vorhergehenden Oszillationsschritt vorgegebene Negativform des Schneidkopfes 13 in einen zylindrischen Bohrungsabschnitt vergrößert, der als zweiter Bohrungsabschnitt 44 in Fig. 2 gestrichelt angedeutet ist. So ergibt sich im zweiten Bohrungsabschnitt 44 eine Vergrößerung des Querschnittes der Bohrung auf eine vollständig zylindrische Form, sofern eine Drehung von mindestens 360° verwirklicht wird.

Im Ergebnis wird so eine Bohrung 40 erzeugt, die einen ersten Bohrungsabschnitt 42 und einen zweiten Bohrungsabschnitt 44 aufweist, wobei sich am Übergang zwischen dem ersten Bohrungsabschnitt 42 und dem zweiten Bohrungsabschnitt 44 Hinterschneidungen 46 ergeben.

In Fig. 3 ist eine alternative Ausführung eines erfindungsgemäßen Werkzeuges in der Seitenansicht dargestellt und insgesamt mit der Ziffer 10' bezeichnet. Wiederum weist das Werkzeug 10' einen Schaft 12 und einen Schneidkopf 13 an dessen zweiten Ende auf. Auf der dem Schaft 12 gegenüberliegenden Seite des Schneidkopfes 12 ist ein Bohreransatz 48 vorgesehen, der mit der Längsachse 18 des Schaftes 12 ausgerichtet ist. Der Bohreransatz 48, der beispielsweise als Gesteinsbohrer ausgeführt sein kann, erlaubt es, zunächst in einem Arbeitsgang mit dem Werkzeug 10' eine Vorbohrung zu erzeugen und gleichzeitig nach Erreichen einer bestimmten Tiefe den Oszillationsvorgang zur Erzeuqunq des ersten Bohrunqsabschnittes durchzuführen. Dabei wird das Werkzeug 10' an der von den Bohrerabschnitt 48 erzeugten Bohrung zentriert und kann somit nicht seitlich auswandern.

Es versteht sich, dass statt einer Kombination eines Bohreransatzes mit dem Werkzeug auch lediglich ein Werkzeug gemäß Fig. 1 verwendet werden könnte, und dass in einem anderen Arbeitsgang mit einem üblichen Bohrer zunächst eine Vorbohrung erzeugt wird. In diesem Fall wäre vorzugsweise an der dem Schaft 12 abgewandten Seite des Schneidkopfes 13 ein Zentrieransatz vorgesehen, so dass das Werkzeug mit dem Zentrieransatz an der zuvor erzeugten Bohrung geführt werden kann.

Es versteht sich ferner, dass die anhand von Fig. 1 beschriebene Form des Schneidkopfes 13 lediglich beispielhafter Natur ist. Es können somit beliebig viele Vorsprünge vorgesehen sein, die in Bezug auf den Schaft 12 radial nach außen hervorstehen. Ferner kann die Form der Vorsprünge in vielfältiger Weise abgewandelt werden. Auch ist die Form der Außenoberflächen 34, 36, 38 in vielfältiger Weise an die jeweiligen Gegebenheiten anpassbar. Schließlich können die Vertiefungen 28, 30, 32 die verschiedenartigsten Formen und Größen aufweisen.

Jedoch ist den verschiedenen Ausführungen gemeinsam, dass der Schneidkopf zumindest einen Vorsprung aufweisen muss, der gegenüber dem Schaft radial nach außen hervorsteht, so dass bei der Erzeugung des ersten Bohrungsabschnittes mittels Oszillationsunterstützung eine von einem Zylinder abweichende Bohrungsform erzeugt wird.

Ein Oszillationsantrieb, der vorteilhaft in Verbindung mit dem erfindungsgemäßen Werkzeug verwendet werden kann, ist in Fig. 4 dargestellt und insgesamt mit der Ziffer 50 bezeichnet.

Hierbei handelt es sich um einen Oszillationsantrieb der grundsätzlich aus der WO 95/17991 A2 bekannten Art. Hiernach ist ein Antrieb, dessen Abtriebswelle eine intermittierende Drehbewegung ausführt, über eine Freilaufkupplung mit einer Antriebswelle für ein Werkzeug koppelbar. Auf diese Weise wird die intermittierende Drehbewegung in eine impulsartige Drehbewegung mit einer Vorzugsdrehrichtung umgesetzt.

In Abwandlung von den aus der WO 95/17991 A2 bekannten Antrieben kann allerdings die Freilaufkupplung festgestellt werden, so dass der Oszillationsantrieb 50 zwei Betriebsarten aufweist, nämlich eine erste Betriebsart, in der das hierin eingespannte Werkzeug in eine hin- und hergehende Drehoszillationsbewegung um seine Längsachse versetzt wird, sowie in eine zweite Betriebsart, in der das Werkzeug in einer Vorzugsdrehrichtung mit Drehimpulsen angetrieben wird.

Der in Fig. 4 dargestellte Oszillationsantrieb 50 weist ein Gehäuse 52 auf, in dem ein Elektromotor 54 aufgenommen ist. Die Motorwelle 56 des Elektromotors 54 treibt eine Oszillationseinrichtung 58 an, die etwa eine Schwenkgabel aufweist, die mit einem Exzenter zusammenwirkt. Mittels der Oszillationseinrichtung 58 wird die rotatorische Bewegung der Motorwelle 56 in eine Drehschwenkbewegung einer Welle 60 umgesetzt. Von der Welle 60 ist ein Freilauf 62 angetrieben. Dieser ist abtriebsseitig mit einer Antriebswelle 66 verbunden, an der eine Werkzeugaufnahme 64, etwa ein Spannfutter, zur Aufnahme eines Werkzeuges 10 bzw. 10' vorgesehen ist. Der Freilauf 62 ist umschaltbar zwischen einem starren Durchtrieb und einer Freilaufwirkung. Somit wird in einer ersten Stellung (starrer Durchtrieb) die Oszillationsbewegung der Welle 60 unmittelbar auf die Antriebswelle 66 übertragen. Diese Betriebsart ermöglicht die Erstellung des ersten Bohrungsabschnittes 42 mit der hin und her oszillierenden Drehbewegung. Soll anschließend der zweite Bohrungsabschnitt 44 erzeugt werden, so wird der Freilauf 62 umgestellt, so dass die Oszillationsbewegung der Welle 60 in Drehimpulse mit einer Vorzugsrichtung (Rechtslauf oder Linkslauf) umgesetzt wird. So lässt sich der zweite Bohrungsabschnitt auf besonders einfache Weise mit Hilfe des Oszillationsantriebes 50 erzeugen.

Zu der Ausführung des Oszillationsantriebes 50 wird im Einzelnen auf die WO 95/17991 A2 verwiesen, deren Offenbarung vollständig durch Bezugnahme eingeschlossen ist. In Abwandlung zu der bekannten Ausführung ist der Freilauf 62 jedoch umstellbar ausgebildet, wie vorstehend erwähnt.

Es versteht sich, dass anstelle eines umschaltbaren Oszillationsantriebes auch lediglich ein einfacher Oszillationsantrieb verwendet werden könnte, der lediglich eine hin- und hergehende Oszillationsbewegung des Werkzeuges erzeugt. Der zweite Bohrungsabschnitt könnte dann etwa durch allmähliches Drehen der Maschine bei laufendem Oszillationsantrieb erzeugt werden.

## Patentansprüche

1. Werkzeug zur Verstellung von Bohrungen mit einer von einem Zylinder abweichenden Form, mit einem Schaft (12), der ein erstes Ende (14) und ein zweites Ende (16) aufweist, wobei das erste Ende (14) zur Einspannung an einem Oszillationsantrieb ausgebildet ist, und wobei am zweiten Ende (16) ein Schneidkopf (13) mit mindestens zwei gegenüber dem Schaft (12) in Radialrichtung hervorstehenden Vorsprüngen (22, 24, 26) vorgesehen ist, die mit Schneidmittel versehen sind, **dadurch gekennzeichnet, dass** der Schneidkopf (13) dem Schaft (12) abgewandte Oberflächen aufweist, die mit abrasiven Schneidmitteln versehen sind.

2. Werkzeug nach Anspruch 1, **dadurch gekennzeichnet, dass** der Schneidkopf (13) mindestens drei Vorsprünge (22, 24, 26) aufweist, die vorzugsweise in gleichen Winkelabständen zueinander angeordnet sind, wobei zwischen benachbarten Vorsprüngen (22, 24, 26) Vertiefungen (28, 30, 32) gebildet sind.

3. Werkzeug nach Anspruch 1 oder 2, **dadurch gekennzeichnet, dass** an zumindest einem Vorsprung (22, 24, 26) abrasive Schneidmittel und/oder Schneidzähne vorgesehen sind.

4. Werkzeug nach Anspruch 1, 2 oder 3, **dadurch gekennzeichnet, dass** an zumindest einer Stirnfläche (47) eines Vorsprungs (22, 24, 26) abrasive Schneidmittel und/oder Schneidzähne vorgesehen sind.

5. Werkzeug nach Anspruch 3 oder 4, **dadurch gekennzeichnet, dass** die Schneidmittel Diamantschneidmittel, Borkarbidschneidmittel, Korundschneidmittel oder dgl. umfassen.

6. Werkzeug nach einem der vorhergehenden Ansprüche, **dadurch gekennzeichnet, dass** zumindest eine Außenoberfläche (34, 36, 38) eines Vorsprungs (22, 24, 26) annähernd kreisbogenförmig ausgebildet ist.

7. Werkzeug nach einem der vorhergehenden Ansprüche, **gekennzeichnet durch** einen Bohreransatz (48).

8. Werkzeug nach Anspruch 7, **dadurch gekennzeichnet, dass** der Bohreransatz (48) mit einer Längsachse (18) des Schaftes (12) ausgerichtet ist.

9. Werkzeug nach einem der vorhergehenden Ansprüche, **dadurch gekennzeichnet, dass** zumindest die Schneidmittel oder der Bohreransatz (48) zum Gesteinsbohren oder zum Bohren in Holz ausgebildet sind.

10. Kit zum Erzeugen einer Bohrung (40) umfassend ein Werkzeug (10) nach einem der vorhergehenden Ansprüche und mindestens einen Bohrer.

11. Werkzeugmaschine mit einer Oszillationseinrichtung (58), mittels derer eine Antriebswelle (66) um ihre Längsachse hin und her oszillierend antreibbar ist, **gekennzeichnet durch** ein Werkzeug (10, 10') nach einem der Ansprüche 1 bis 9.

12. Werkzeugmaschine nach Anspruch 11, **gekennzeichnet durch** Mittel zur Umsetzung der oszillierenden Bewegung in Drehimpulse.

13. Werkzeugmaschine nach Anspruch 11 oder 12, **dadurch gekennzeichnet, dass** die Oszillationseinrichtung zwischen einer hin und her gehenden Oszillation um eine Längsachse der Antriebswelle (66) und einer Oszillation mit Drehimpulsen in einer Vorzugsdrehrichtung umschaltbar ist.

14. Werkzeugmaschine nach Anspruch 13, **dadurch gekennzeichnet, dass** die Abtriebswelle (60) der Oszillationseinrichtung (58) eine intermittierende Drehbewegung ausführt und mit einer Freilaufkupplung (62) zur Erzeugung einer Oszillation mit Drehimpulsen koppelbar ist.

15. Verfahren zum Erzeugen einer Bohrung (40) mit folgendem Schritt:
(a) Erzeugen eines ersten Bohrungsabschnittes (42) mittels eines oszillierend angetriebenen Werkzeuges (10, 10'), wobei der erste Bohrungsabschnitt (42) eine von einem Zylinder abweichende Form aufweist und mindestens einen von der Wandfläche des ersten Bohrungsabschnittes (42) zur Bohrungsmitte hin vorstehenden Vorsprung aufweist.

16. Verfahren nach Anspruch 15, bei dem nach Erreichen einer gewünschten Bohrungstiefe folgender zweiter Schritt durchgeführt wird:
(b) zumindest teilweises Drehen des Werkzeuges (10, 10') um seine Längsachse (18), um einen zweiten Bohrungsabschnitt (44) zu erzeugen, der einen größeren Querschnitt als der erste Bohrungsabschnitt (42) aufweist.

17. Verfahren nach Anspruch 16, bei dem das Werkzeug (10, 10') beim Schritt (b) von Hand gedreht wird oder rotierend oder intermittierend mit einer Vorzugsrichtung angetrieben wird.

18. Verfahren nach Anspruch 16 oder 17, bei dem vor dem Schritt (a) zunächst eine Vorbohrung erzeugt wird.

19. Verfahren nach Anspruch 15 oder 16, bei dem während des Schrittes (a) eine Vorbohrung erzeugt wird.

20. Verfahren nach einem der Ansprüche 15 bis 19, bei dem ein Werkzeug (10, 10') nach einem der Ansprüche 1 bis 9 oder ein Kit nach Anspruch 10 zur Erzeugung der Bohrung (40) verwendet wird.

## Claims

1. A tool for the production of bores having a shape deviating from a cylinder, the tool comprising a shank (12) which has a first end (14) and a second end (16), the first end (14) being designed for chucking on an oscillatory drive, the tool further comprising at the second end (16) a cutting head (13) having at least two projections (22, 24, 26) projecting radially, **characterized in that** the cutting head (13) comprises surfaces remote from the shaft (12) having abrasive cutting means.

2. The tool according to claim 1, **characterized in that** the cutting head (13) has at least three projections (22, 24, 26) which are arranged preferably at equal angular intervals in relation to one another, depressions (28, 30, 32) being formed between adjacent projections (22, 24, 26).

3. The tool according to claim 1 or 2, **characterized in that** abrasive cutting means and/or cutting teeth are provided on at least one projection (22, 24, 26).

4. The tool according to claim 1, 2 or 3, **characterized in that** abrasive cutting means and/or cutting teeth are provided on at least one end face (47) of a projection (22, 24, 26).

5. The tool according to claim 3 or 4, **characterized in that** the cutting means comprise diamond cutting means, boron carbide cutting means, corundum cutting means or the like.

6. The tool according to one of the preceding claims, **characterized in that** at least one outer surface (34, 36, 38) of a projection (22, 24, 26) has a design approximately in the form of an arc of a circle.

7. The tool according to one of the preceding claims, **characterized by** a drill attachment (48).

8. The tool according to claim 7, **characterized in that** the drill attachment (48) is aligned with a longitudinal axis (18) of the shank (12).

9. The tool according to one of the preceding claims, **characterized in that** at least the cutting means or the drill attachment (48) are designed for rock drilling or for drilling into wood.

10. A kit for the production of a bore (40), comprising a tool (10) according to one of the preceding claims and at least one drill.

11. A power tool comprising an oscillatory device (58), by means of which a drive shaft (66) can be driven to and fro oscillatingly about its longitudinal axis, **characterized by** a tool (10, 10') according to any one of claims 1 to 9.

12. The power tool according to claim 11, **characterized by** means for converting the oscillation movement into angular momentums.

13. The power tool according to claim 11 or 12, **characterized in that** the oscillatory drive can be changed over between a to-and-fro oscillation about a longitudinal axis of the drive shaft (66) and an oscillation with angular momentums in a preferred direction of rotation.

14. The power tool according to claim 13, **characterized in that** the output shaft (60) of the oscillatory device (58) executes an intermittent rotational movement and can be coupled to an overrunning clutch (62) for generating an oscillation with angular momentums.

15. A method for the production of a bore (40), comprising the following step:
(a) producing a first bore portion (42) using an oscillatingly driven tool (10, 10'), the first bore portion (42) having a shape deviating from a cylinder and having at least one projection projecting from the wall face of the first bore portion (42) towards the bore centre.

16. The method according to claim 15, wherein, after the desired bore depth is reached, the following second step is carried out:
(b) rotating the tool (10, 10') at least partially about its longitudinal axis (18) for producing a second bore portion (44) having a larger cross section than the first bore portion (42).

17. The method according to claim 16, wherein, in step (b), the tool (10, 10') is rotated by hand or is driven in rotation or intermittently with a preferred direction.

18. The method according to claim 16 or 17, wherein a pre-bore is first made before step (a).

19. The method according to claim 15 or 16, wherein a pre-bore is made during step (a).

20. The method according to one of claims 15 to 19, wherein a tool (10, 10') according to one of claims 1 to 9 or a kit according to claim 10 is used for producing the bore (40).

## Revendications

1. Outil pour réaliser des perçages avec une forme différente d'un cylindre, comprenant une tige (12), qui présente une première extrémité (14) et une seconde extrémité (16), la première extrémité (14) étant conçue pour être fixée sur un entraînement d'oscillation, et une tête de coupe (13) étant prévue sur la seconde extrémité (16) avec au moins deux saillies (22, 24, 26) dépassant par rapport à la tige (12) dans le sens radial, lesquelles sont dotées de moyens de coupe, **caractérisé en ce que** la tête de coupe (13) présente des surfaces opposées à la tige (12), qui sont dotées de moyens de coupe abrasifs.

2. Outil selon la revendication 1, **caractérisé en ce que** la tête de coupe (13) présente au moins trois saillies (22, 24, 26), qui sont disposées de préférence à des distances angulaires identiques les unes par rapport aux autres, des cavités (28, 30, 32) étant formées entre des saillies (22, 24, 26) voisines.

3. Outil selon la revendication 1 ou 2, **caractérisé en ce que** des moyens de coupe abrasifs et/ou des dents de coupe sont prévus sur au moins une saillie (22, 24, 26).

4. Outil selon la revendication 1, 2 ou 3, **caractérisé en ce que** des moyens de coupe abrasifs et/ou des dents de coupe sont prévus sur au moins une surface frontale (47) d'une saillie (22, 24, 26).

5. Outil selon la revendication 3 ou 4, **caractérisé en ce que** les moyens de coupe comportent des moyens de coupe en diamant, des moyens de coupe en carbure de bore, des moyens de coupe en corindon ou similaires.

6. Outil selon l'une quelconque des revendications précédentes, **caractérisé en ce qu'**au moins une surface extérieure (34, 36, 38) d'une saillie (22, 24, 26) est conçue approximativement en forme d'arc de cercle.

7. Outil selon l'une quelconque des revendications précédentes, **caractérisé par** un embout de foret (48).

8. Outil selon la revendication 7, **caractérisé en ce que** l'embout de foret (48) est aligné avec un axe longitudinal (18) de la tige (12).

9. Outil selon l'une quelconque des revendications précédentes, **caractérisé en ce qu'**au moins les moyens de coupe ou l'embout de foret (48) est conçu pour percer dans de la pierre ou pour percer dans du bois.

10. Kit pour générer un perçage (40) comprenant un outil (10) selon l'une quelconque des revendications précédentes et au moins un foret.

11. Machine-outil avec un dispositif d'oscillation (58), au moyen duquel un arbre d'entraînement (66) peut être entraîné autour de son axe longitudinal en faisant des oscillations d'un côté et de l'autre, **caractérisée par** un outil (10, 10') selon l'une quelconque des revendications 1 à 9.

12. Machine-outil selon la revendication 11, **caractérisée par** des moyens pour transformer le mouvement oscillant en impulsions de rotation.

13. Machine-outil selon la revendication 11 ou 12, **caractérisée en ce que** le dispositif d'oscillation peut être commuté entre une oscillation faisant des allées et venues autour d'un axe longitudinal de l'arbre d'entraînement (66) et une oscillation avec des impulsions de rotation dans un sens de rotation préférentiel.

14. Machine-outil selon la revendication 13, **caractérisée en ce que** l'arbre de sortie (60) du dispositif d'oscillation (58) exécute un mouvement de rotation intermittent et peut être couplé avec un accouplement à roue libre (62) pour générer une oscillation avec des impulsions de rotation.

15. Procédé pour générer un alésage (40) comprenant l'étape suivante :
(a) génération d'une partie de perçage (42) au moyen d'un outil (10, 10') entraîné de façon oscillante, la première partie de perçage (42) présentant une forme différente d'un cylindre et présentant au moins une saillie dépassant de la surface de paroi de la première partie de perçage (42) en direction du centre du perçage.

16. Procédé selon la revendication 15, dans lequel la seconde étape suivante est exécutée après avoir atteint une profondeur de perçage souhaitée :
(b) rotation au moins partielle de l'outil (10, 10') autour de son axe longitudinal (18), afin de générer une seconde partie de perçage (44) qui présente une section plus grande que la première partie de perçage (42).

17. Procédé selon la revendication 16, dans lequel l'outil (10, 10') est tourné manuellement lors de l'étape (b) ou est entraîné en rotation ou de façon intermittente avec une direction préférentielle.

18. Procédé selon les revendications 16 ou 17, dans lequel un avant-trou est généré d'abord avant l'étape (a).

19. Procédé selon les revendications 15 ou 16, dans lequel un avant-trou est généré pendant l'étape (a).

20. Procédé selon l'une quelconque des revendications 15 à 19, dans lequel un outil (10, 10') selon l'une quelconque des revendications 1 à 9 ou un kit selon la revendication 10 est utilisé pour générer le perçage (40).
